# FASCICULE DE BREVET EUROPEEN

(11) **EP 0 330 594 B1**
(45) Date de publication et mention de la délivrance du brevet: **25.08.1993**
(21) Numéro de dépôt: 89420069.0
(22) Date de dépôt: 22.02.1989
(51) Int. Cl.: A47C 4/02, A47C 11/00, B60N 2/00, A47C 1/12

(54) **Structure de siège simple ou multiple**
Gefüge für einen oder mehrere Sitze
Single or multiple seat structure

(30) Priorité: 22.02.1988 FR 8802566
(43) Date de publication de la demande: 30.08.1989
(73) Titulaire: GRAMMER-SABLE, F-42230 Roche La Molière (Loire) (FR)
(72) Inventeur: Alirol, Louis, F-42160 Andrezieux Boutheon (FR); Domps, Georges, F-92300 Levallois Perret (FR); Ercilla, José, F-42160 Bonson (FR)
(74) Mandataire: Perrier, Jean-Pierre

(56) Documents cités:
- DE-U- 8 704 426
- FR-A- 2 306 659
- FR-A- 2 357 211
- US-A- 3 702 204
- US-A- 4 509 796
- US-A- 4 580 841

## Description

L'invention est relative aux sièges utilisés dans les collectivités, les cars, les trains ou tous autres moyens de transport et lieux recevant du public. Les sièges actuels sont en général composés, pour chaque unité d'assise, que cette unité corresponde à une personne ou à plusieurs personnes dans le cas d'un banquette, d'un support d'assise fixé sur un bâti comprenant un ou plusieurs longerons solidaires de pieds.

La structure d'assise est monolithique et formée par soudage d'éléments en forme réalisés en tôle. Elle est destinée à supporter le coussin d'assise et le coussin de dossier.

Bien que fort utilisée, une telle structure présente de nombreux inconvénients. C'est ainsi qu'elle est sujette à la corrosion, au moins dans les zones de soudure, qu'elle est lourde, qu'elle est onéreuse en raison du nombre élevé d'éléments qu'il faut assembler par soudure. De plus sa réalisation monolithique, d'une part, nécessite une modification de ses dimensions chaque fois que de nouvelles applications entrainent une modification de l'encombrement général du siège, et, d'autre part, rend mal aisée son adaptation à l'évolution des besoins et à la personnalisation du siège par l'apport d'accessoires divers, tels que accoudoirs, repose-pieds, repose-mollets, tablette ou tétière.

Dans le modèle d'utilité allemand 8704426, la fixation de la structure d'assise est assurée par des longerons réalisés par découpage à la longueur de l'unité d'assise de profilés métalliques caisonnés comportant des rainures en "C".

On connaît par le brevet U.S. 4580841, une structure modulaire de fauteuil dans laquelles des plaques constituant les supports d'assises et de dossier coopèrent avec des éléments de liaison réalisés dans des profilés extrudés sectionnés à la longueur de l'assise et dans laquelle l'ensemble des éléments précités repose sur un bâti, sans longeron.

On connaît également par le brevet U.S. 3702204 une structure modulaire pour sièges de gradins dans laquelle le support d'assise est maintenu sur deux longerons fixés sur le gradin, par des éléments d'extrémités fixés par des vis coopérant avec des rainures des longerons.

La présente invention a pour but de fournir une structure de siège qui, non seulement, remédie aux inconvénients de l'état de la technique mais aussi simplifie la construction du siège, tant en ce qui concerne l'assemblage de ses composants, que son adaptabilité aux contraintes dimensionnelles et d'utilisation, et permet ultérieurement la mise en place aisée d'accessoires divers.

Cette structure est du type comportant, selon le DE-U-8704426, pour chaque unité d'assise, un bâti pour la fixation des éléments de support de l'assise et du dossier réalisés, au moins en partie, dans des profilés extrudés découpés à la longueur de l'unité d'assise, ce bâti étant composé de longerons caissons découpés dans un profilé extrudé comportant des rainures longitudinales en "C" débouchant de ses faces.

Selon l'invention, son bâti est constitué par un unique longeron comportant, en complément, des rainures en "C" débouchant de ses faces latérales, deux rainures en "C" débouchant de chacune de ses grandes faces, et formant seul l'élément principal du support d'assise et armature de maintient pour, d'une part, un élément antérieur et un élément postérieur de support d'assise, découpés dans des profilés en forme et comportant, chacun, au moins une nervure longitudinale apte à s'engager dans les rainures latérales, respectivement antérieure et postérieure du longeron, d'autre part, et par l'intermédiaire du bord postérieur de l'élément postérieur, pour un élément support de dossier, et, de plus, pour des crosses d'extrémités en forme de "L", emprisonnant transversalement les éléments du support d'assise, chacune de ces crosses présentant sur sa branche horizontale, une aile en "U" retourné coiffant le longeron sur lequel elle est fixée par des vis se logeant dans les rainures supérieures du longeron, et, sur sa branche verticale, une aile interne sur laquelle sont fixés les éléments du support de dossier.

Avec cet agencement, le longeron contribue non seulement à la formation du bâti mais aussi à la formation de la structure d'assise, et surtout, permet de fixer les divers composants de cette structure et de nombreux accessoires. En outre, la réalisation des éléments supports d'assise et supports de dossier dans des profilés extrudés, positionnés entre eux mais fixés par les crosses latérales, permet de les sectionner à la longueur d'assise voulue et donc d'adapter instantanément la fabrication du siège aux besoins et à l'encombrement disponible, et cela sans frais supplémentaire. Enfin, la fixation par des vis ou rivets, en nombre réduit, simplifie la fabrication et supprime tout risque de corrosion.

D'autres caractéristiques et avantages ressortiront de la description qui suit en référence au dessin schématique annexé représentant à titre d'exemples non limitatifs une forme d'exécution de cette structure de siège.
Figure 1 est une vue en perspective éclatée avec coupe partielle montrant les composants essentiels de la structure,
Figures 2, 3, 4 et 5 sont des vues en coupe transversale montrant la section de chacun des profilés formant, respectivement le longeron, l'élément antérieur d'assise, l'élément postérieur d'assise, et la traverse tétière.

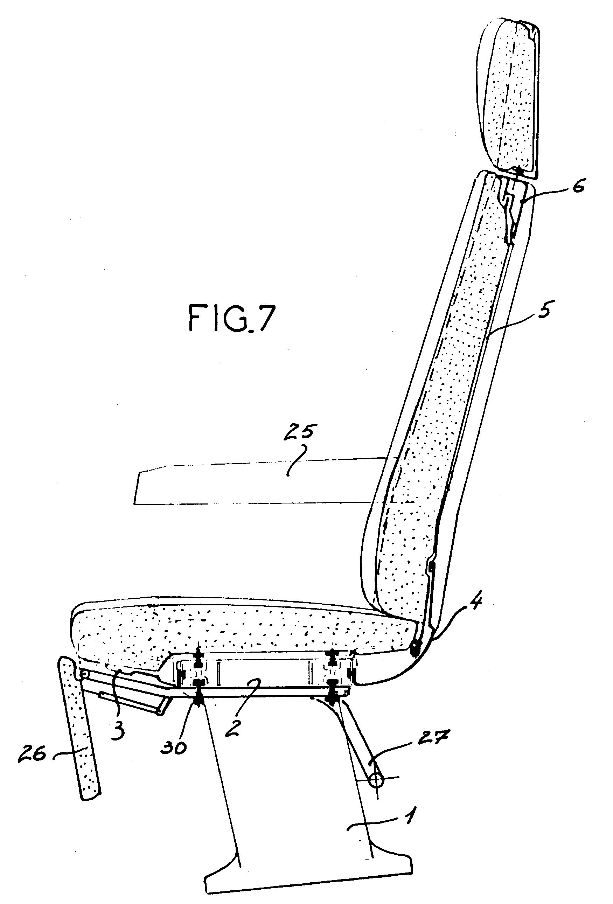

Figures 6 à 9 sont des vues en coupe transversale de différents types de siège formés à partir de cette structure.

La structure de siège, selon l'invention, est donc essentiellement composée d'un longeron 2, d'un élément d'assise antérieur 3, d'un élément d'assise postérieur 4, constituant support d'assise, mais aussi d'une tôle de garnissage 5, et d'une traverse tétière 6 constituant, avec des goussets 7 et des crosses latérales 8, les éléments supports de dossier.

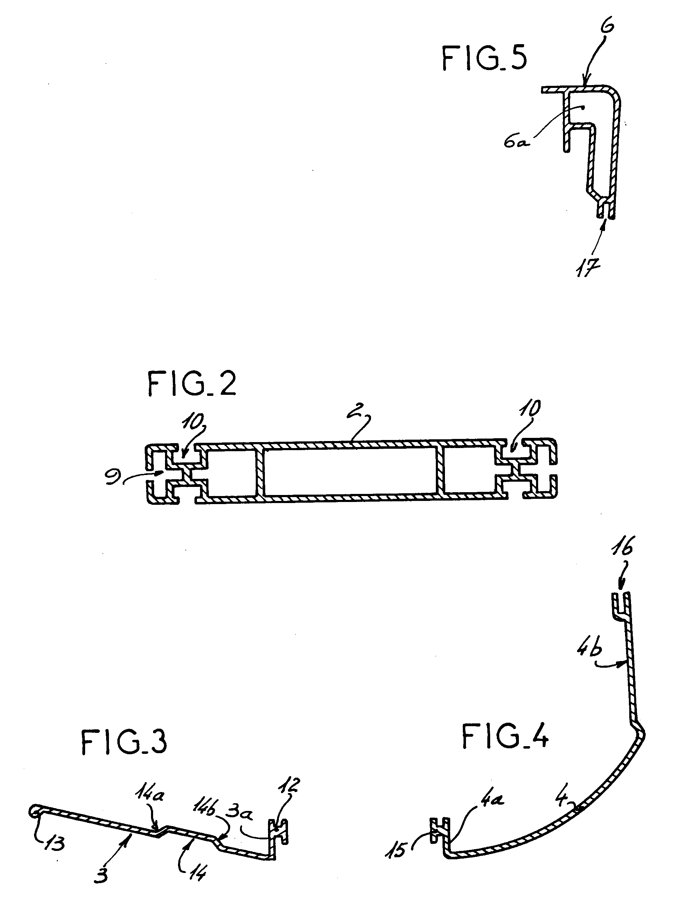

Comme le montre plus en détails la figure 2, le longeron 2 est constitué par un profilé métallique extrudé, présentant une section transversale rectangulaire et comportant, latéralement, des rainures longitudinales 9 de section transversale en C débouchant de chacun de ses champs et des rainures 10, de même section, débouchant de ses deux grandes faces. Dans la forme d'exécution représentée, les rainures 10 sont au nombre de deux par grande face.

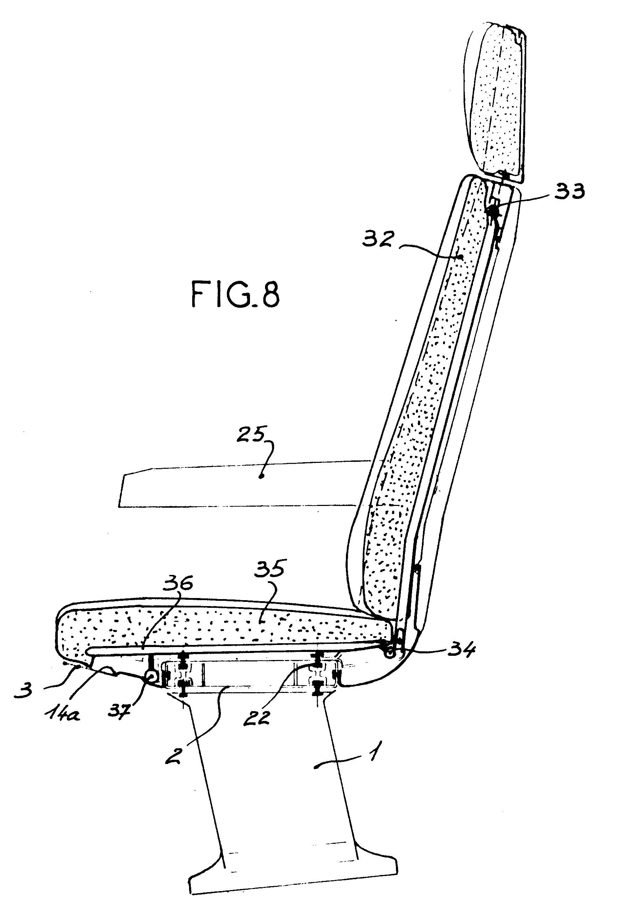

L'élément d'assise antérieur est également constitué par un profilé métallique extrudé, comportant, comme montré à la figure 3, un retour 3a duquel fait saillie une nervure de section en T 12 apte à être engagée dons l'une des rainures latérales 9 du longeron 2. Sur son bord longitudinal opposé au retour 3a, l'élément 3 comporte un bourrelet 13 et, entre ce bourrelet et ledit retour 3a, une nervure de renfort 14 de section transversale trapézoïdale dont la concavité est tournée vers le bas. Comme cela sera précisé plus loin, en référence aux formes d'exécution des sièges des figures 8 à 9, les faces latérales 14a et 14b de cette nervure, constituent des rampes aptes à coopérer avec les galets d'un système de verrouillage en position du siège.

L'élément 4 d'assise postérieur est également réalisé dans un profilé métallique extrudé, et présente en section transversale la forme générale d'un L dont la branche horizontale est incurvée. A son extrémité inférieure, cette branche est munie d'un retour coudé 4a duquel fait saillie une nervure externe 15 à section en T apte à s'engager dans l'une des rainures latérales 9 du longeron 2. L'aile verticale 4b est munie, sur son bord supérieur, d'une gorge 16 constituant moyen de positionnement de la tôle de garnissage 5.

La traverse 6 est réalisée dans un profilé tubulaire comportant une cavité de section en L 6a, une face antérieure d'appui 6b pour le coussin, et une gorge 17 ménagée sur son bord inférieur.

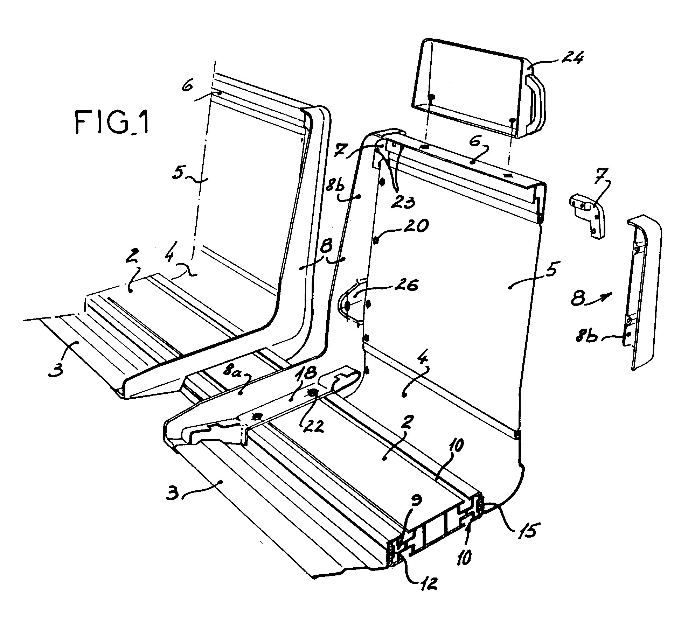

Ces différents éléments sont réalisés dans un alliage d'aluminium, ce qui présente l'avantage, à résistance égale, de réduire le poids de la structure et les risques de corrosion dans le temps. Ils sont utilisés avec les crosses 8 qui, comme le montre la figure 1, sont de type droite et gauche et présentent chacune la forme d'un L. Leur branche horizontale 8a comporte, en saillie de sa face interne, au moins une aile 18 en forme de U retourné apte à coiffer le longeron 2. Léur branche verticale 8b comporte une aile interne 19, constituant face d'appui, pour l'élément postérieur d'assise 4 et pour la tôle de garnissage 5, et moyens de fixation pour des vis 20.

Enfin, la liaison entre les crosses 8 et la traverse tétière 6, est assurée par l'intermédiaire des goussets 7 qui, comme le montre la figure 1, ont la forme générale d'un L dont la branche horizontale est apte à pénétrer dans l'extrémité de la cavité interne 6a de la traverse tétière 6 et dont la branche verticale est apte à se loger dans l'extrémité supérieure interne de la crosse correspondante.

Comme le montre la figure 1, que l'unité d'assise soit constituée par une banquette ou par plusieurs sièges indépendants, le longeron 2, constituant bâti, s'étend sur toute la longueur de l'unité d'assise. Il faut ici noter que, du fait de sa réalisation à partir d'un profilé extrudé, ce longeron est très facilement découpé à la longueur exacte de l'unité d'assise. Quant aux autres éléments constituant l'unité d'assise, et en particulier, l'élément 3, l'élément 4, la tôle 5 et la traverse tétière 6, ils sont découpés soit à la longueur de cette unité, si celle-ci est destinée à former une banquette, soit à la longueur individuelle de chacun des sièges, si l'unité comporte plusieurs sièges juxtaposés.

Là encore, le découpage en longeur de chacun de ces éléments dans un profilé de base permet de donner à chacun d'eux, une longueur précise correspondant exactement aux besoins de l'unité d'assise et simplifie donc l'adaptation de la construction de cette unité.

Lorsque le longeron 2 a reçu les pieds 1, ou tout autre moyen de fixation au sol ou contre une paroi, moyens se fixant par des vis disposées dans les rainures en C inférieures 10, il est procédé à la construction de chacun des supports d'assise par engagement des nervures en T 12 et 15, respectivement de l'élément antérieur d'assise 3 et de l'élément postérieur d'assise 4 dans les rainures en C latérales 9 de ce longeron. Dès que ces éléments sont positionnés, mais non encore calés, la tôle de garnissage 5 et la traverse tétière 6 sont mises en place pour constituer le support de dossier. Le calage en translation des différents éléments est assuré par la mise en place des deux crosses latérales 8 dont les ailes 18 viennent coiffer le longeron 2 sur lequel elles sont fixées par des vis 22.Les têtes de ces vis se logent dans les rainures en C 10 débouchant de la face supérieure du longeron 2. Après qu'aient été mises en place des vis ou rivets 20, assurant la liaison entre les éléments 4, 5 et 7 avec les ailes internes 19 des deux crosses. La structure forme un ensemble rigide pouvant recevoir le coussin de siège et celui de dossier. La fixation de la traverse tétière 6 aux deux crosses 8 est assurée par l'intermédiaire des goussets 7 et au moyen de vis ou rivets 23 liant ces goussets aux deux éléments précités.

La figure 1 montre que la traverse tétière peut recevoir, dès la construction du siège, un boitier 24 pour un coussin appui-tête.

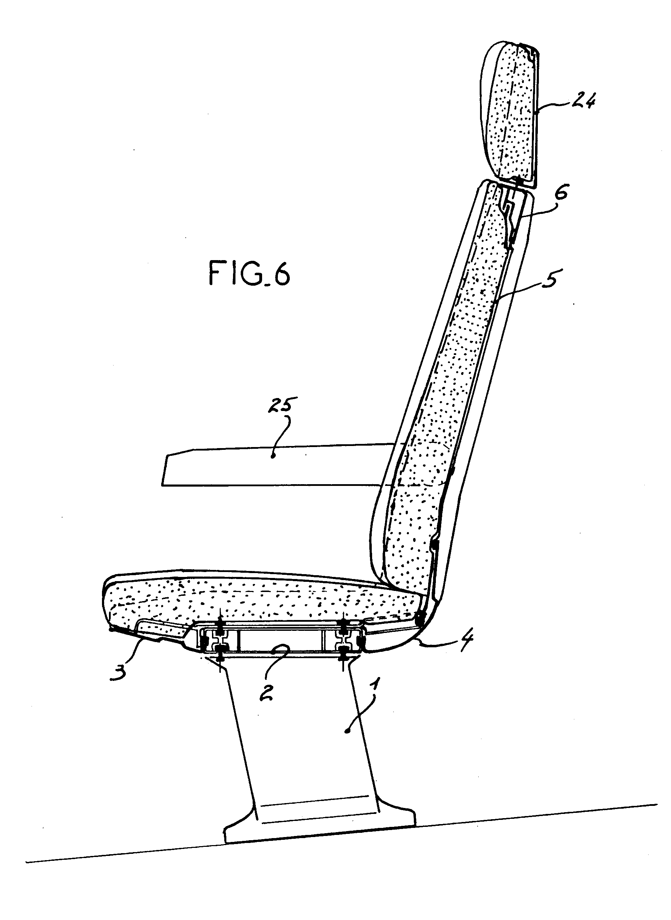

La figure 6 montre un siège avec garnissage fixe réalisé à partir de la structure selon l'invention. Elle met en évidence que le longeron 2 constitue bien élément inférieur principal du support d'assise en même temps que sa fonction d'armature du bâti de l'unité d'assise. Ce siège est muni d'un ou de deux accoudoirs 25 dont l'articulation est montée sur le palier 26 ménagé, de façon connue, dans chacune des crosses 8.

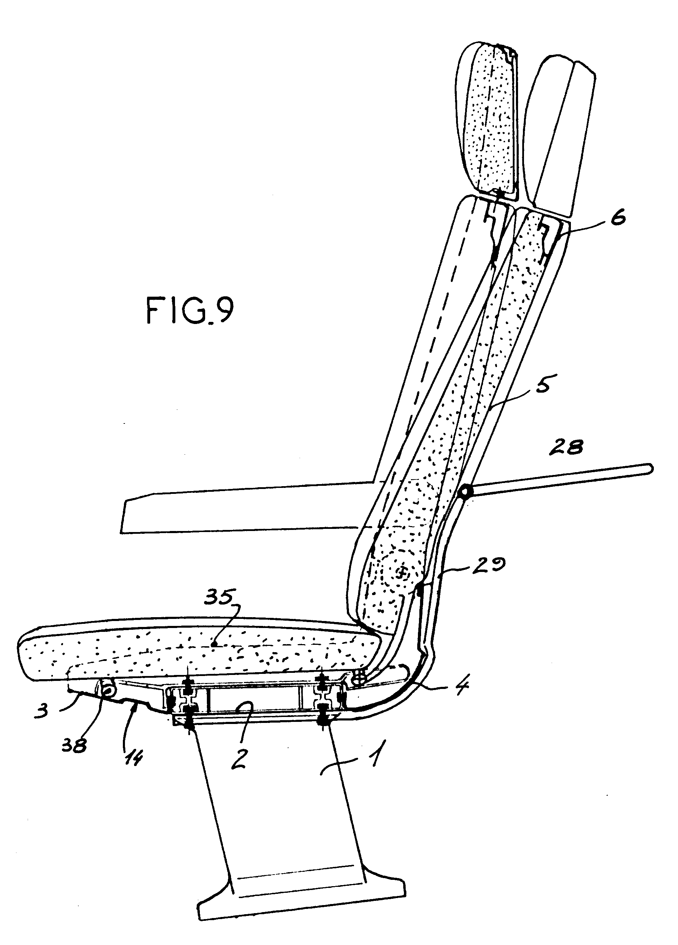

Un tel siège peut recevoir, immédiatement lors de sa construction, mais aussi ultérieurement et en fonction des besoins, divers accessoires tels qu'un repose-mollets 26, un repose-pieds 27 et une tablette 28 avec support 29, visible figure 9. Ces différents éléments sont fixés par des vis 30 dont les têtes se logent dans les rainures en C inférieures 10 du longeron 2.

Cette possibilité d'adaptation est très intéressante car elle permet, à partir d'une structure standard, de personnaliser chaque unité d'assise.

Dans le siège représenté à la figure 8, le dossier 32 est articulé en partie supérieure en 33 et en partie inférieure en 34 au coussin de siège 35 solidaire d'une structure rigide 36 porteuse de galets 37. Cet ensemble constitue un système de relaxation pouvant occuper deux positions, une position avec dossier vertical représenté à la figure 8, et une position avec dossier incliné obtenu en déplaçant le coussin de siège 35 sur l'avant. Ces deux positions sont verrouillées par les galets 37 coopérant avec les faces inclinées 14a et 14b de la nervure 14 de l'élément d'assise antérieur 3.

La figure 9 montre que la même structure d'assise peut être utilisée avec un siège muni d'un dispositif de relaxation avec dossier basculant, cas dans lequel la nervure 14 est inopérante, mais ne perturbe pas le déplacement des galets 38 du mécanisme de déplacement du coussin de siège 35.

Il ressort de ce qui précède que la structure, selon l'invention, non seulement, simplifie la construction de l'unité d'assise en permettant son adaptabilité aux besoins, mais aussi procure un allègement de la structure, tout en supprimant les risques de corrosion. De plus, la structure convient pour tous les types de siège, qu'ils soient à coussin fixe ou déplaçable et peut recevoir, lors de sa construction, ou ultérieurement, tout type d'accessoires.

Il est évident que la liaison entre le profilé 2, et les éléments 3 et 4, qui dans cette forme d'exécution est réalisée par engagement de nervures en T dans des rainures en C peut être assurée par tout autre moyen équivalent, tel que clipsage de nervures déformables.

## Revendications

1. Structure de siège simple ou multiple, du type comportant, pour chaque unité d'assise, un bâti pour la fixation des éléments de support de l'assise et du dossier, réalisés, au moins en partie, dans des profilés extrudés découpés à la longueur de l'unité d'assise, ce bâti étant composé de longerons caissons découpés dans un profilé extrudé comportant des rainures longitudinales en "C" débouchant de ses faces, caractérisée en ce que
- son bâti est constitué par un unique longeron (2)) comportant, en complément, des rainures en "C" (9) débouchant de ses faces latérales, deux rainures en "C" (10) débouchant de chacune de ses grandes faces, et formant seul l'élément principal du support d'assise et armature de maintien pour
- d'une part, un élément antérieur (3) et un élément postérieur (4) de support d'assise, découpés dans des profilés en forme et comportant, chacun, au moins une nervure longitudinale (12-15) apte à s'engager dans les rainures latérales (9), respectivement antérieure et postérieure du longeron (2),
- d'autre part, et par l'intermédiaire du bord postérieur de l'élément postérieur (4), pour un élément (5) support de dossier,
- et, de plus, pour des crosses d'extrémités (8) en forme de "L", emprisonnant transversalement les éléments (3-4) du support d'assise,
- chacune de ces crosses (8) présentant
- sur sa branche horizontale (8a), une aile (18) en "U" retourné coiffant le longeron (2) sur lequel elle est fixée par des vis se logeant dans les rainures supérieures (10) du longeron (2),
- et, sur sa branche verticale (8b), une aile interne (19) sur laquelle sont fixés les éléments (5-6-7) du support de dossier.

2. Structure selon la revendication 1, caractérisée en ce l'élément antérieur (3) du support d'assise comporte une nervure de renfort (14) de section transversale sensiblement trapézoïdale, dont la concavité est tournée vers le bas et dont les faces latérales (14a-14b) constituent crans de verrouillage pour des galets (37) du mécanisme de déplacement du coussin de siège entre deux positions d'utilisation.

3. Structure selon l'une quelconque des revendications 1 et 2, caractérisée en ce que l'aile interne (19) de chacune des crosses (8) sert à la fixation de la branche verticale d'un gousset (7) en forme de "L", dont la branche horizontale pénètre et est fixée dans une traverse têtière (6) participant avec l'élément postérieur (4) d'assise, à un maintien d'une tôle (5) du support de dossier.

## Claims

1. A single or multiple seat structure of the type including, for each seat unit, a frame for fixing seat and back support elements, formed, at least in part, from extruded profiles cut to the length of the seat unit, this frame being composed of hollow main frame members cut from an extruded profile including longitudinal C-shaped grooves opening from its faces, characterised in that
- its frame is constituted by a single main frame member (2) including, in addition, C-shaped grooves (9) opening at its lateral faces, two C-shaped grooves (10) opening at each of its major faces and forming only the main seat support element and a retaining structure for
- on the one hand, a front element (3) and a rear element (4) of the seat support, cut from shaped profiles and each including at least one longitudinal rib (12-15) adapted to engage in the respective front and rear lateral grooves (9) of the main frame (2),
- on the other hand, and by means of the rear edge of the rear element (4) for a back support element (5),
- and, in addition, for L-shaped end members (8) transversely enclosing the elements (3-4) of the seat support,
- each of the members (8) having
- on its horizontal arm (8a), a returned U-shaped wing (18) covering the main frame (2) on which it is fixed by screws lodging in upper grooves (10) of the main frame (2),
- and, on its vertical arm (8b) an internal wing (19) on which are fixed the elements (5-6-7) of the back support.

2. A structure according to Claim 1, characterised in that the front element (3) of the seat support includes a reinforcing rib (14) having a substantially trapezoidal transverse section, of which the concavity is directed downwardly and of which the lateral faces (14a-14b) constitute locking catches for rollers (37) of the mechanism for moving the seat cushion between two positions of use.

3. A structure according to either of Claims 1 and 2, characterised in that the internal wing (19) of each of the end members (8) serves for fixing the vertical arm of an L-shaped gusset (7) of which the horizontal arm enters and is fixed within a transverse head piece (6) serving, with the rear seat element (4), to retain a back support plate (5).

## Patentansprüche

1. Einfach- oder Mehrfachsitzstruktur des Typs, welcher umfaßt für jede Sitzflächeneinheit ein Gestell für die Festlegung der Sitzflächen- und Rückenlehnenträgerelemente, welche wenigstens teilweise aus in der Länge der Sitzeinheit abgeschnittenen extrudierten Profilen gebildet sind, wobei dieses Gestell aus von einem extrudierten Profil abgeschnittenen, kastenförmigen Hauptträgern besteht, welches Profil "C"-förmige Längsnuten aufweist, die in seine Flächen münden,
**dadurch gekennzeichnet**, daß
- ihr Gestell durch einen einzigen Hauptträger (2) gebildet ist, der zusätzlich zu den in seine Seitenflächen mündenden "C"-förmigen Nuten (9) zwei in jede seiner großen Flächen mündende "C"-förmige Nuten (10) aufweist und allein das Hauptelement des Sitzflächenträgers bildet und das Traggerüst bildet für
- einerseits ein vorderes Element (3) und ein hinteres Element (4) des Sitzflächenträgers, welche aus Formprofilen geschnitten sind und jeweils wenigstens eine Längsrippe (12-15) umfassen, die geeignet ist, in die entsprechenden vorderen und hinteren seitlichen Nuten (9) des Hauptträgers (2) einzugreifen,
- andererseits mittels des hinteren Rands des hinteren Elements (4) für ein Rückenlehnenträgerelement (5),
- und darüber hinaus für "L"-förmige am Ende gebogene Randelemente, welche die Elemente (3-4) des Sitzflächenträgers transversal einschließen,
- wobei jedes dieser am Ende gebogenen Elemente (8) aufweist
- an seinem horizontalen Abschnitt (8a) einen "U"-förmigen, vorspringenden Flügel (18), welcher den Hauptträger (2) überdeckt, auf welchem er durch Schrauben befestigt ist, die in den oberen Nuten (10) des Hauptträgers (2) aufgenommen sind,
- und an seinem vertikalen Abschnitt (8b) einen inneren Flügel (19), auf welchem die Elemente (5-6-7) des Rückenlehnenträgers befestigt sind.

2. Struktur nach Anspruch 1, **dadurch gekennzeichnet**, daß das vordere Element (3) des Sitzflächenträgers eine Verstärkungsrippe (14) mit im wesentlichen trapezförmigem Querschnitt aufweist, der nach unten zu konkav ist und dessen Seitenflächen (14a-14b) Verriegelungsfeststellmittel bilden für Rollen (37) des Verlagerungsmechanismus des Sitzpolsters zwischen zwei Gebrauchspositionen

3. Struktur nach einem der Ansprüche 1 und 2, **dadurch gekennzeichnet**, daß der innere Flügel (19) jedes der am Ende gebogenen Elemente (8) zur Festlegung des vertikalen Abschnitts eines "L"-förmigen Eckstücks (7) dient, dessen horizontaler Abschnitt in einen zusammen mit dem hinteren Sitzflächenelement am Halten eines Rückenlehnenträgerblechs (5) beteiligten Kopfauflagenquerträger (6) eindringt und darin befestigt ist.
